# EUROPÄISCHE PATENTSCHRIFT

(11) **EP 3 705 280 B1**
(45) Veröffentlichungstag und Bekanntmachung des Hinweises auf die Patenterteilung: **19.04.2023**
(21) Anmeldenummer: 20161270.2
(22) Anmeldetag: 05.03.2020
(51) Int. Cl.: B29C 70/38

(54) **FERTIGUNGSANLAGE UND VERFAHREN ZUR HERSTELLUNG EINES FASERVERBUNDBAUTEILS**
PRODUCTION SYSTEM AND METHOD FOR PRODUCING A FIBRE COMPOSITE COMPONENT
USINE DE FABRICATION ET PROCÉDÉ DE FABRICATION D'UN COMPOSANT COMPOSITE RENFORCÉ PAR DES FIBRES

(30) Priorität: 08.03.2019 DE 102019105999
(43) Veröffentlichungstag der Anmeldung: 09.09.2020
(73) Patentinhaber: Deutsches Zentrum für Luft- und Raumfahrt e.V., 51147 Köln (DE)
(72) Erfinder: KOLBE, Andreas, 22305 Hamburg (DE); DELISLE, Dominik, 21682 Stade (DE)
(74) Vertreter: Gramm, Lins & Partner Patent- und Rechtsanwälte PartGmbB

(56) Entgegenhaltungen:
- WO-A1-2007/076775
- DE-A1-102015 100 102
- US-A1- 2015 224 941
- US-A1- 2017 144 387

## Beschreibung

Die Erfindung betrifft eine Fertigungsanlage zur Herstellung eines Faserverbundbauteils aus einem Faserverbundwerkstoff aufweisend ein Fasermaterial und ein das Fasermaterial einbettendes Matrixmaterial. Die Erfindung betrifft ebenso ein Verfahren hierzu.

Faserverbundwerkstoffe sind aus der Luft- und Raumfahrt heute nicht mehr wegzudenken. Insbesondere kritische Strukturelemente werden aufgrund der hohen gewichtsspezifischen Festigkeit und Steifigkeit des Werkstoffes aus faserverstärkten Kunststoffen gefertigt. Dabei kommen neben trockenen Faserhalbzeugen auch sogenannte Prepregs zum Einsatz, bei denen die Fasern bereits mit einem Matrixmaterial vorimprägniert sind. Durch die aus der Faserorientierung resultierenden anisotropen Eigenschaften der Faserverbundwerkstoffe können Bauteil exakter an lokale Belastungen angepasst werden und ermöglichen so eine optimale Materialausnutzung im Sinne des Leichtbaus.

Durch die Forderung nach immer höheren Stückzahlen sowie den hohen qualitativen Ansprüchen an die Qualität der Bauteile bei zunehmender Komplexität der Bauteilgeometrie wird der gesamte Herstellungsprozess zunehmend automatisiert. Hierbei werden in der Regel ortsgebundene Anlagen verwendet, bei denen die Fasern mithilfe eines beweglichen Endeffektors auf ein feststehendes Werkzeug abgelegt werden.

So werden in der industriellen Fertigung von großen Luftfahrtstrukturen wie Flügel, Rumpfschalen und Seitenleitwerke zumeist große ortsgebundene Portalanlagen verwendet, bei denen der Endeffektor zum Ablegen der Fasern an einer verfahrbaren Brücke montiert ist. Durch die verschiedenen Achsen des Endeffektors und der Portalanlage kann Material auf mehrfach gekrümmte Konturen abgelegt werden.

Aus der DE 10 2010 015 027 B4 ist darüber hinaus eine Faserlegeanlage bekannt, bei der um ein feststehendes Formwerkzeug ein Schienensystem angeordnet ist, auf dem mehrere Roboter um das Werkzeug herum verfahrbar vorgesehen sind. Die einzelnen Roboter weisen als Endeffektor einen Ablegekopf auf, mit dem Fasern auf dem in der Mitte des Schienensystems angeordneten Formwerkzeug abgelegt werden können.

Des Weiteren ist aus der DE 10 2015 100 102 A1 eine Fertigungsanlage zur Herstellung eines Faserverbundbauteils bekannt, wobei die Fertigungsanlage ein Werkzeug mit einer formgebenden Werkzeugoberfläche zur Herstellung einer Faserpreform hat. Die Fertigungsanlage weist darüber hinaus eine mobile Robotereinheit auf, die eine Bewegungseinheit hat, die zum Befahren der formgebenden Werkzeugoberfläche ausgebildet ist. Mithilfe der mobilen Robotereinheit kann zumindest ein Teil des Herstellungsprozesses bei der Herstellung der Faserpreform durchgeführt werden, wobei hierfür die mobile Robotereinheit ein Arbeitsmodul hat, welches den entsprechenden Teil des Herstellungsprozesses, wie beispielsweise die Ablage von Fasermaterial auf dem Werkzeug, ermöglicht. Die Energieversorgung der mobilen Robotereinheit erfolgt dabei mithilfe von Akkumulatoren oder drahtlos mithilfe von Laserstrahlen, die auf die sich bewegende mobile Robotereinheit gerichtet werden.

Nachteilig hierbei ist jedoch, dass die Kapazität der Akkumulatoren aufgrund des begrenzten Bauchraumes der mobilen Robotereinheiten stark beschränkt ist, wodurch ein dauerhafter autarker Betrieb der mobilen Robotereinheit nicht gewährleistet werden kann. Die Energieversorgung mithilfe von Laserstrahlen, die auf die mobile Robotereinheit gerichtet werden, hat hingegen den Nachteil, dass die zu legenden Fasern während des Produktionsprozesses oder die bereits abgelegten Fasern durch einen zu hohen Energieeintrag beschädigt werden können. Außerdem sind derartige Anlagen zur Energieversorgung mobiler Robotereinheiten sehr aufwendig und bedürfen besonderer Schutzmaßnahmen für das Personal, wodurch sie in der Anschaffung und im Betrieb sehr kostenintensiv sind.

Es ist daher Aufgabe der vorliegenden Erfindung eine verbesserte Fertigungsanlage sowie ein verbessertes Verfahren zur Herstellung eines Faserverbundbauteils anzugeben, welches eine autarke Energieversorgung einzelner Robotereinheiten zur Durchführung von einzelnen Herstellungsschritten bei der Herstellung eines Faserverbundbauteils ermöglicht, ohne dabei den Herstellungsprozess an sich zu gefährden.

Die Aufgabe wird mit der Fertigungsanlage gemäß Patentanspruch 1 sowie dem Verfahren gemäß Anspruch 8 erfindungsgemäß gelöst. Vorteilhafte Ausführungsformen der Erfindung finden sich in den entsprechenden Unteransprüchen.

Gemäß Anspruch 1 wird eine Fertigungsanlage zur Herstellung eines Faserverbundbauteils aus einem Faserverbundwerkstoff aufweisend ein Fasermaterial und ein das Fasermaterial einbettendes Matrixmaterial vorgeschlagen, wobei die Fertigungsanlage ein Werkzeug und mindestens eine Robotereinheit hat. Das Werkzeug weist gattungsgemäß eine formgebende Werkzeugoberfläche auf, auf der durch Ablegen von Fasermaterial eine Faserpreform herstellbar ist. Die formgebende Werkzeugoberfläche stellt dabei in der Regel eine Negativform der späteren Bauteilform dar, sodass durch die formgebende Werkzeugoberfläche das Bauteil seine entsprechende Bauteilgeometrie erhält. Auf der formgebenden Werkzeugoberfläche können darüber hinaus weitere Elemente, Bauteile oder Hilfsstoffe zur Herstellung eines Vakuumaufbaus, wie beispielsweise eine Vakuumfolie, ein Trennvlies oder ein Siegelband, aufgebracht werden.

Im einfachsten Fall besteht die herzustellende Faserpreform lediglich aus den abzulegenden Fasermaterialien (trocken oder vorimprägniert), was insbesondere bei der Verwendung von geschlossenen Formwerkzeugen der Fall ist. Bei großen Bauteilgeometrien wird jedoch meist eine sogenannte Open-Mould Technologie verwendet, bei der die Fasermaterialien einerseits auf einem Formwerkzeug abgelegt und andererseits mit einer Vakuumfolie luftdicht verschlossen werden, sodass der Bereich unter der Vakuumfolie, der die Fasern beinhaltet, evakuierbar ist und somit das Matrixmaterial zum späteren Zeitpunkt infundiert werden kann. Die Faserpreform kann somit nicht nur aus dem reinen Fasermaterial bestehen, sondern auch weiterhin Hilfsstoffe wie Trennvlies, Abreißgewebe, Vakuumfolie oder Siegelband aufweisen und somit den vollständigen Vakuumaufbau einschließlich der Fasern beinhalten. Nicht selten werden in die Fasern auch Sensoren und/oder Aktoren eingearbeitet, um beispielsweise Schwingungen detektieren oder Verformungen erzeugen zu können. Die Faserpreform kann somit neben den Fasermaterialien des Faserverbundwerkstoffes auch in das Fasermaterial eingearbeitete Sensoren und/oder Aktoren beinhalten.

Die Fertigungsanlage weist des Weiteren mindestens eine Robotereinheit auf, die wenigstens ein Arbeitsmodul hat, welches zur Durchführung mindestens eines Herstellungsschrittes bei der Herstellung der Faserpreform vorgesehen ist. Ein solches Arbeitsmodul, wie später noch gezeigt wird, kann beispielsweise ein Faserlegemodul sein, mit dem Fasermaterialien auf die formgebende Werkzeugoberfläche abgelegt werden können. Ein solches Faserlegemodul kann beispielsweise ein Faserlegekopf sein, der in Form eines Endeffektors Fasermaterial, welches ihm kontinuierlich zugeführt wird, ablegen kann. Die Robotereinheit weist des Weiteren eine Bewegungseinheit auf, mittels derer das Arbeitsmodul, beispielsweise der Endeffektor, über die Werkzeugoberfläche des Formwerkzeugs und/oder darauf abgelegten Fasermaterialien der Faserpreform verfahrbar ist.

Die Bewegungseinheit der Robotereinheit kann hierfür beispielsweise so ausgebildet sein, dass sie Räder und/oder Walzen und/oder andere Radelemente aufweist, sodass die Robotereinheit kontaktbehaftet über die formgebende Werkzeugoberfläche bzw. darauf abgelegter Fasermaterialien verfahren werden kann. In diesem Fall ist die Robotereinheit mittels der Bewegungseinheit in der Lage, auf der formgebenden Werkzeugoberfläche zu fahren. Bei der Bewegungseinheit kann es sich aber auch um einen Knickarmroboter handeln, an dessen kinematischen Ende als Endeffektor das Arbeitsmodul angeordnet ist. In diesem Fall ist die Bewegungseinheit dazu ausgebildet, das Arbeitsmodul über die formgebende Werkzeugoberfläche und/oder über die abgelegten Fasermaterialien kontaktlos zu verfahren bzw. zu bewegen.

Erfindungsgemäß ist nun vorgesehen, dass die Fertigungsanlage eine Energieversorgungseinrichtung zur elektrischen Energieversorgung der mindestens einen Robotereinheit hat, wobei die Energieversorgungseinrichtung zur drahtlosen Energieübertragung elektrische Energie mittels elektromagnetischer Felder ausgebildet ist. Hierfür sind ein oder mehrere Sender zum Erzeugen von elektromagnetischen Feldern zum Zwecke der drahtlosen Energieübertragung in dem Werkzeug bzw. der formgebenden Werkzeugoberfläche vorgesehen, wobei mindestens ein Empfänger zum Empfangen von elektromagnetischen Feldern zum Zwecke der drahtlosen Energieübertragung in der Robotereinheit angeordnet ist. Die Robotereinheit ist nun zum Umwandeln der durch den wenigstens einen Empfänger empfangenen elektromagnetischen Felder in elektrische Energie ausgebildet, um die Robotereinheit mithilfe der elektromagnetischen Felder mit elektrischer Energie zu versorgen.

Mithilfe der vorliegenden Erfindung wird es nunmehr möglich, Robotereinheiten, die mithilfe eines Arbeitsmoduls zur Durchführung mindestens eines Herstellungsschrittes bei der Herstellung einer Faserpreform vorgesehen sind, mit elektrischer Energie zu versorgen, ohne dass hierbei die Gefahr besteht, bereits abgelegtes Fasermaterial oder in der Nähe befindliche Personen zu schädigen. Des Weiteren wird der Vorteil erreicht, dass die Robotereinheiten nicht zwangsläufig mit einem Stromkabel verbunden werden müssen, um die Robotereinheiten kontinuierlich mit elektrischer Energie zu versorgen, und dass die Robotereinheiten, wenn ein Batteriebetrieb möglich ist, nicht an definierte Servicestationen zum Aufladen der Batterien gebunden sind. Vielmehr ist es mithilfe der erfindungsgemäßen Fertigungsanlage zur Herstellung eines Faserverbundbauteils nunmehr möglich, Robotereinheiten zur Durchführung von Arbeitsprozessen bei der Herstellung von Faserpreform nahezu autark und nahezu unbegrenzt einzusetzen, zumindest im Hinblick auf die Energieversorgung. Lange Ladezeiten zum Aufladen der Batterien der Robotereinheiten entfallen, wodurch der Herstellungsprozess nicht nur sicherer durchführbar ist, sondern auch kosteneffektiver.

Aufgrund der Tatsache, dass für die mobilen Robotereinheiten eine kabelgebundene Stromversorgung entfällt, können sich die mobilen Robotereinheiten freier bewegen und haben in Bezug auf das Formwerkzeug einen nahezu unbegrenzten Aktionsradius.

Die Erfinder haben hierbei erkannt, dass im Bereich der Herstellung von Faserverbundbauteile eine elektrische Energieversorgung mittels elektromagnetischer Felder derart möglich ist, dass die an dem Herstellungsprozess beteiligten Robotereinheiten mithilfe der elektromagnetischen Felder prozesssicher mit elektrischer Energie versorgt werden können. Es hat sich gezeigt, dass mithilfe einer drahtlosen Energieübertragung mittels elektromagnetischer Felder die Robotereinheiten auch beim Legen von Fasermaterialien sowie bei der Qualitätsüberwachung abgelegter Fasermaterialien prozesssicher mit elektrischer Energie versorgt werden können.

Mittels der vorliegenden Erfindung wird somit insbesondere bei großen Anlageflächen der Nachteil der aus dem Stand der Technik bekannten Fertigungsanlagen kompensiert, da nunmehr der für die Durchführung des jeweiligen Herstellungsschrittes notwendige Endeffektor nahezu unbegrenzt und nahezu autark mit elektrischer Energie versorgt werden kann.

Gemäß einer Ausführungsform weist mindestens eine der Robotereinheiten einen Energiespeicher auf, der zur elektrischen Energieversorgung der Robotereinheit vorgesehen ist, wobei die Robotereinheit weiterhin eingerichtet ist, die drahtlos übertragene und von dem Empfänger der jeweiligen Robotereinheit empfangene elektrische Energie in den Energiespeicher einzuspeisen. Die Robotereinheit ist dann weiterhin ausgebildet, die in dem elektrischen Energiespeicher gespeicherte elektrische Energie zur Stromversorgung zumindest eines Teils der Robotereinheit zu verwenden. Dies kann beispielsweise das Betreiben des Arbeitsmoduls zur Durchführung des jeweiligen Herstellungsschrittes sein. Denkbar ist aber auch, dass die Bewegungseinheit der Robotereinheit zum Bewegen der Robotereinheit mit elektrischer Energie aus dem Energiespeicher versorgt wird.

So kann es vorgesehen sein, dass die Robotereinheit an bestimmten Punkten des Werkzeugs mittels der elektromagnetischen Felder mit elektrischer Energie versorgt wird, die dann in den Energiespeicher eingespeist wird. Anschließend bewegt sich das Arbeitsmodul bzw. der Endeffektor mithilfe der Bewegungseinheit über dem Formwerkzeug, um mittels des Arbeitsmoduls den entsprechenden Prozessschritt durchzuführen. Anschließend erreicht die Robotereinheit wieder eine Position eines Senders in dem Formwerkzeug und wird dann mittels der elektromagnetischen Felder wieder mit elektrischer Energie versorgt. Hierdurch werden die Robotereinheiten und insbesondere die Energiespeicher der Robotereinheiten kontinuierlich in diskreten Abständen mit elektrischer Energie versorgt, ohne das hierfür die Robotereinheit mit einem Stromversorgungskabel verbunden sein muss.

Gemäß einer Ausführungsform hierzu weist der Energiespeicher der Robotereinheit ein oder mehrere Kondensatoren, insbesondere Superkondensatoren, auf. Gerade die Superkondensatoren haben den Vorteil, dass sie sehr schnell aufgeladen werden können. Der Nachteil der geringeren Energiedichte in Bezug zu herkömmlichen Ackumulatoren und der damit einhergehenden geringeren Ladekapazität kann durch eine Erhöhung der Sender in dem Formwerkzeug kompensiert werden, sodass die Robotereinheiten statistisch betrachtet sehr häufig die Gelegenheit haben, den aus Kondensatoren bestehenden Energiespeicher mit elektrischer Energie aufzuladen.

Gemäß einer Ausführungsform ist vorgesehen, dass in einem Randbereich der formgebenden Werkzeugoberfläche des Werkzeugs eine Mehrzahl von Sender zur drahtlosen Energieübertragung angeordnet sind. Dabei kann vorgesehen sein, dass außerhalb dieser Randbereiche, d. h. insbesondere in jenen Bereichen, in denen die Faserpreform hergestellt wird, keine Sender zur drahtlosen Energieübertragung der Energieversorgungseinrichtung vorgesehen sind. Dadurch werden die Robotereinheiten nur dann mit elektrischer Energie durch die Sender zur drahtlosen Energieübertragung mittels elektromagnetischer Felder versorgt, wenn die Robotereinheit oder ein Teil der Robotereinheit, die den Empfänger für die elektromagnetischen Felder enthält, in den Randbereich der formgebenden Werkzeugoberfläche verfahren bzw. bewegt wird.

Handelt es sich bei der Robotereinheit um ein auf dem Formwerkzeug fahrbares Objekt (bspw. mittels Räder), so wird die Robotereinheit immer dann mit elektrischer Energie versorgt, wenn sie in den Randbereich des Formwerkzeugs verfahren wird. Der oder die Empfänger für die elektromagnetischen Felder zwecks drahtloser Energieübertragung befinden sich dabei in der Robotereinheit, beispielsweise in dem Arbeitsmodul oder in der Bewegungseinheit. Handelt es sich hingegen um einen Knickarmroboter, an dessen kinematischen Ende das Arbeitsmodul als Endeffektor angeordnet ist, so ist es vorteilhaft, wenn der oder die Empfänger für die elektromagnetischen Felder zwecks drahtloser Energieübertragung sich in dem Arbeitsmodul, an dem Endeffektor oder in der Nähe des Endeffektors befinden. Wird der Endeffektor mithilfe des Knickarmroboters nunmehr in den Randbereich des Formwerkzeugs mit den Sendern bewegt, so kann hierüber eine entsprechende Energieversorgung stattfinden.

Gemäß einer Ausführungsform ist vorgesehen, dass das Arbeitsmodul der Robotereinheit ein Faserlegemodul, ein Hilfsstoffmodul, ein Applikationsmodul und/oder ein Qualitätsmodul ist.

Das Faserlegemodul ist zum Ablegen von Fasermaterial auf der formgebenden Werkzeugoberfläche zur Herstellung der Faserpreform ausgebildet. Ein derartiges Faserlegemodul weist dabei zumindest eine Anpressrolle oder eine Anpresseinheit auf, mit der das abzulegende Fasermaterial auf die formgebende Werkzeugoberfläche angedrückt werden kann, wenn die Robotereinheit bzw. das Arbeitsmodul über die formgebende Werkzeugoberfläche verfahren wird. So kann beispielsweise während des Befahrens der formgebenden Werkzeugoberfläche das Fasermaterial mittels des Faserlegemoduls abgelegt werden.

Das Hilfsstoffmodul ist zum Aufbringen von Hilfsstoffen auf das abgelegte Fasermaterial zur Herstellung eines Vakuumaufbaus der Faserpreform ausgebildet. Derartige Hilfsstoffe können beispielsweise Vakuumfolien, Trennvlies, Abreißgewebe, Fließhilfen und/oder Siegelbänder sein. Denkbar ist aber auch, dass die Hilfsstoffe in Form von Hilfsstoffpaketen, die aus mehreren Lagen verschiedener Hilfsstoffe aufgebaut sind, mithilfe des Hilfsstoffmoduls aufgebracht bzw. eingebracht werden.

Das Applikationsmodul ist zum Applizieren von Sensoren und/oder Aktoren in das abgelegte Fasermaterial der Faserpreform ausgebildet. Das Applizieren von Sensoren und/oder Aktoren erfolgt dabei während des Verfahrens des Arbeitsmoduls über die formgebende Werkzeugoberfläche.

Das Qualitätsmodul als Arbeitsmodul ist zum Überprüfen der Qualität der Faserpreform, insbesondere der Ablagequalität der abgelegten Fasermaterialien, ausgebildet. Ein derartiges Qualitätsmodul kann beispielsweise einen Infrarotsensor, einen Laserlichtschnittsensor und/oder einen Wirbelstromsensoren aufweisen, mit deren Hilfe dann insbesondere die abgelegten Fasermaterialien hinsichtlich der Faserorientierung, Faserausrichtung sowie anderer Qualitätsmerkmale überprüft und untersucht werden können. Auch hierbei erfolgt die Überprüfung der Qualität der abgelegten Fasern bzw. der gesamten Faserpreform während des Verfahrens des Arbeitsmoduls über die formgebende Werkzeugoberfläche.

Das Qualitätsmodul kann darüber hinaus auch so eingerichtet sein, dass die Qualität von Hilfsstoffen und/oder applizierter Elemente wie Sensoren und/oder Aktoren, die in die Faserpreform eingebracht wurden, überprüft werden. Somit lässt sich vollständig automatisiert nicht nur die Qualität der abgelegten Fasermaterialien überprüfen, sondern der gesamte Vakuumaufbau einschließlich der Hilfsstoffe.

Gemäß einer Ausführungsform ist vorgesehen, dass mindestens eine der Robotereinheiten eine mobile Robotereinheit ist, deren Bewegungseinheit zum befahren der formgebenden Werkzeugoberfläche ausgebildet ist, um die mobile Robotereinheit auf der formgebenden Werkzeugoberfläche zu bewegen. Hierbei kann es sich um eine mobile Robotereinheit handeln, wie sie aus der DE 10 2015 100 102 A1 bekannt ist, deren Inhalt vollständig hier Bezug genommen wird.

Gemäß einer Ausführungsform kann aber auch vorgesehen sein, dass mindestens eine der Robotereinheiten als Bewegungseinheit einen Knickarmroboter aufweist, an dem als Endeffektor das mindestens eine Arbeitsmodul angeordnet ist.

Gemäß einer Ausführungsform ist vorgesehen, dass die Energieversorgungseinrichtung zur induktiven drahtlosen Energieübertragung ausgebildet ist, wobei als Sender jeweils Induktionsspulen in dem Werkzeug vorgesehen sind. Als Empfänger in den Robotereinheiten können ebenfalls entsprechende Induktionsspulen vorgesehen sein, um die von den Sendern ausgesendeten elektromagnetischen Felder zum Zwecke der drahtlosen Energieübertragung entsprechend empfangen zu können. Hierbei kann das Prinzip der induktiven Kopplung oder der kapazitativen Kopplung zum Zwecke der drahtlosen Energieübertragung verwendet werden.

Die Erfindung wird anhand der beigefügten Figuren beispielhaft näher erläutert. Es zeigen:
- Figur 1:: Schematische Darstellung der erfindungsgemäßen Fertigungsanlage mit einer auf der formgebenden Werkzeugoberfläche fahrenden Robotereinheit;
- Figur 2:: Schematische Darstellung einer Robotereinheit zum befahren eines Formwerkzeugs.

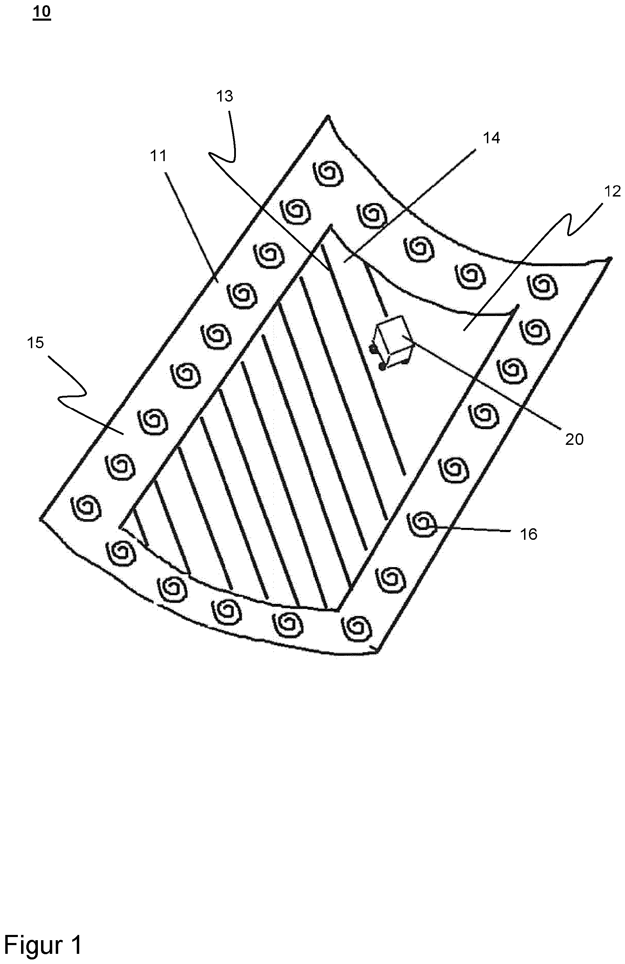

Figur 1 zeigt in einer stark vereinfachten, schematischen Darstellung die erfindungsgemäße Fertigungsanlage 10, die ein Werkzeug bzw. Formwerkzeug 11 hat. Das Formwerkzeug 11 weist eine formgebende Werkzeugoberfläche 12 auf, auf der Fasermaterial 13 zur Herstellung einer Faserpreform 14 abgelegt werden kann. Das Ablegen der Fasermaterialien 13 erfolgt dabei mithilfe einer mobilen Robotereinheit 20, die ein in Figur 1 nicht dargestellte des Arbeitsmodul hat. Das Arbeitsmodul der Robotereinheit 20 ist dabei zum Ablegen der quasiendlosen Fasermaterialien 13 ausgebildet, die mithilfe der Robotereinheit 20 bandförmig und in Figur 1 diagonal zudem im Wesentlichen rechteckig vorliegenden Formwerkzeug 11 abgelegt werden. Wurde eine Faserlage aus Fasermaterial 13 durch die mobile Robotereinheit 20 vollständig abgelegt, so kann die mobile Robotereinheit 20 eine nächste Faser-Lagervorrichtung Fasermaterial 13 auf das bereits abgelegte Fasermaterial ablegen, wobei dann in der Regel eine zu der darunterliegenden Faserlage verschiedene Faserorientierung abgelegt wird, um so dem späteren Bauteil eine hohe Festigkeit und Steifigkeit zu verleihen.

Wie in Figur 1 gezeigte ist, arbeitet die mobile Robotereinheit 20 autark und ist insbesondere dazu ausgebildet, die formgebende Werkzeugoberfläche 12 bzw. bereits darauf abgelegtes Fasermaterial 13 zu befahren. Während sich die mobile Robotereinheit 20 über die formgebende Werkzeugoberfläche 12 fahrend bewegt, wird kontinuierlich das Fasermaterial 13 auf das Werkzeug 11 abgelegt. Die mobile Robotereinheit 20 ist dabei weder mit einem Stromkabel zur kabelgebundenen Stromversorgung verbunden, noch wird die Robotereinheit 20 mithilfe von Laserstrahlen mit elektrischer Energie versorgt.

Erfindungsgemäß erfolgt die elektrische Energieversorgung der mobilen Robotereinheit 20 induktiv, wobei hierfür in einem Randbereich 15 des Formwerkzeugs 11 eine Mehrzahl von Sender 16 in Form von Induktionsspulen vorgesehen sind, die zum Zwecke einer drahtlosen Energieübertragung zum Erzeugen von elektromagnetischen Feldern ausgebildet sind. Die Sender 16 im Randbereich 15 des Formwerkzeugs 11 sind dabei Teil einer elektrischen Energieversorgungseinrichtung zur elektrischen Energieversorgung der Robotereinheit 20.

Die mobile Robotereinheit 20 weist hierfür nun, wie später noch detailliert beschrieben wird, mindestens einen Empfänger zum Empfang der elektromagnetischen Felder zur drahtlosen Energieübertragung auf, um so die mobile Robotereinheit 20 mit elektrischer Energie versorgen zu können. Hat die mobile Robotereinheit 20 auf der formgebenden Werkzeugoberfläche 12 eine Bahn aus Fasermaterial 13 vollständig abgelegt, so befindet sich die mobile Robotereinheit 20 im Randbereich 15 des Formwerkzeugs 11. In diesem Bereich muss die mobile Robotereinheit 20 nun wenden bzw. eine neue Ausrichtung oder Position einnehmen, um angrenzend zu der eben gerade abgelegten Faserbahn eine neue Faserbahn aus Fasermaterial 13 abzulegen.

In dieser Zeit, während sich die mobile Robotereinheit 20 im Randbereich 15 des Formwerkzeugs 11 befindet, kann sie die von den Sendern 16 ausgesendeten elektromagnetischen Felder empfangen und in elektrische Energie umwandeln. Da die mobile Robotereinheit 20 im Ausführungsbeispiel der Figur 1 im eigentlichen Ablegebereich des Formwerkzeugs 11 nicht mit elektrischer Energie versorgt werden kann, da sich hier keine Induktionsspulen befinden, wird die im Randbereich 15 übertragene elektrische Energie in einem elektrischen Energiespeicher der mobilen Robotereinheit 20 zwischen gespeichert. Es hat sich gezeigt, dass mithilfe der Induktionsspulen im Randbereich 15 genügend elektrische Energie auf die mobile Robotereinheit 20 übertragen werden kann, sodass die mobile Robotereinheit 20 ohne weitere Energieaufnahme bis an den gegenüberliegenden Randbereich fahren und dabei Fasermaterial 13 ablegen kann, wo sie dann wieder mit elektrischer Energie aus den Induktionsspulen versorgt wird. Hierdurch wird es möglich, dass die mobile Robotereinheit 20 nahezu unbegrenzt im Hinblick auf die Energieversorgung auf dem Formwerkzeug agieren kann.

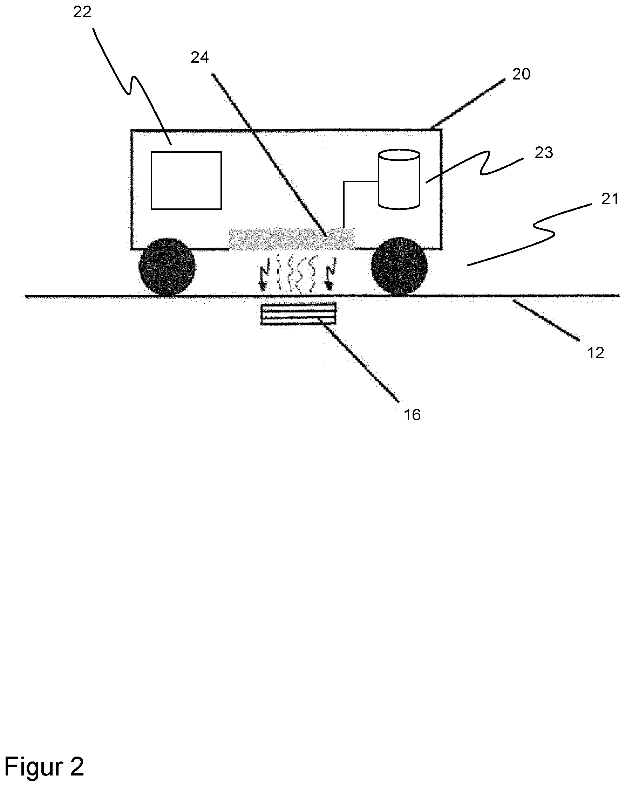

Figur 2 zeigt in schematischer Darstellung eine mobile Robotereinheit 20 im Detail. Die mobile Robotereinheit 20 weist eine Bewegungseinheit 21 auf, die mittels Räder und einem Antrieb dazu eingerichtet ist, die mobile Robotereinheit 20 auf der formgebenden Werkzeugoberfläche 12 des Formwerkzeugs 11 kontaktbehaftet zu bewegen. Die mobile Robotereinheit 20 weist des Weiteren ein Arbeitsmodul 22 auf, welches im Ausführungsbeispiel der Figur 2 ein Faserlegemodul zum Ablegen von Fasermaterial ist. Mithilfe des Faserlegemoduls kann die mobile Robotereinheit 20 während des Fahrens auf der formgebenden Werkzeugoberfläche 12 das Fasermaterial 13 auf die formgebende Werkzeugoberfläche 12 ablegen.

Die mobile Robotereinheit 20 weist des Weiteren erfindungsgemäß einen Empfänger 24 zum Empfang von elektromagnetischen Feldern zur drahtlosen Energieübertragung auf, wobei der Empfänger 24 der mobilen Robotereinheit 20 mit einem Energiespeicher 23 in Verbindung steht. Der Energiespeicher 23 kann dabei aus Kondensatoren bzw. Superkondensatoren aufgebaut sein, deren Kapazität sehr schnell aufgeladen werden kann.

Bewegt sich die mobile Robotereinheit 20 in den Randbereich 15 des Formwerkzeugs 11, so werden die elektromagnetischen Felder, die von den Induktionsspulen 16 im Randbereich 15 des Formwerkzeugs 11 erzeugt werden, von dem Empfänger 24 der mobilen Robotereinheit 20 empfangen und in elektrische Energie umgewandelt. Diese aus der Umwandlung entstehender elektrische Energie wird dann in den Energiespeicher 23 eingespeist, um den Energiespeicher 23 aufzuladen.

Die mobile Robotereinheit 20 ist nun so ausgebildet, dass zumindest ein Teil ihrer Funktionalität, vorzugsweise alle Funktionen mit der in dem elektrischen Energiespeicher 23 gespeicherten elektrische Energie versorgt werden, sodass die mobile Robotereinheit hinsichtlich der elektrischen Energieversorgung kabelloses sich auf dem Formwerkzeug 11 bewegen kann.

### Bezugszeichenliste

- 10: Fertigungsanlage
- 11: Formwerkzeug
- 12: formgebende Oberfläche
- 13: Fasermaterial
- 14: Faserpreform
- 15: Randbereich des Formwerkzeuges
- 16: Sender/Induktionsspulen
- 20: mobile Robotereinheit
- 21: Bewegungseinheit
- 22: Arbeitsmodul
- 23: Energiespeicher
- 24: Empfänger/Induktionsspulen

## Patentansprüche

1. Fertigungsanlage (10) zur Herstellung eines Faserverbundbauteils aus einem Faserverbundwerkstoff aufweisend ein Fasermaterial (13) und ein das Fasermaterial (13) einbettendes Matrixmaterial, wobei die Fertigungsanlage (10) aufweist:
- ein Werkzeug (11) mit einer formgebenden Werkzeugoberfläche (12), auf der durch Ablegen von Fasermaterial (13) eine Faserpreform (14) herstellbar ist, und
- mindestens eine Robotereinheit (20) mit wenigstens einem Arbeitsmodul (22), dass zur Durchführung mindestens eines Herstellungsschrittes bei der Herstellung der Faserpreform (14) ausgebildet ist, und einer Bewegungseinheit (21), mittels derer das Arbeitsmodul (22) über die Werkzeugoberfläche (12) und/oder die Faserpreform (14) verfahrbar ist,
wobei die Fertigungsanlage (10) eine Energieversorgungseinrichtung zur elektrischen Energieversorgung der mindestens einen Robotereinheit (20) hat, die zur drahtlosen Energieübertragung elektrischer Energie mittels elektromagnetischer Felder ausgebildet ist, wobei ein oder mehrere Sender (16) zum Erzeugen von elektromagnetischen Feldern zur drahtlosen Energieübertragung in dem Werkzeug (11) und mindestens ein Empfänger (24) zum Empfangen von elektromagnetischen Feldern zur drahtlosen Energieübertragung in der Robotereinheit (20) vorgesehen ist, wobei die Robotereinheit (20) zum Umwandeln der durch den wenigstens einen Empfänger (24) empfangenen elektromagnetischen Felder in elektrische Energie zur elektrischen Energieversorgung der Robotereinheit (20) ausgebildet ist.

2. Fertigungsanlage (10) nach Anspruch 1, wobei die Robotereinheit (20) einen Energiespeicher (23) aufweist, der zur elektrischen Energieversorgung der Robotereinheit (20) vorgesehen ist, wobei die Robotereinheit (20) weiterhin eingerichtet ist, die drahtlos übertragene und von dem Empfänger (24) der jeweiligen Robotereinheit (20) empfangene elektrische Energie in den Energiespeicher (23) einzuspeisen.

3. Fertigungsanlage (10) nach Anspruch 2, wobei der Energiespeicher (23) der Robotereinheit (20) ein oder mehrere Kondensatoren, insbesondere Superkondensatoren, aufweist.

4. Fertigungsanlage (10) nach einem der vorhergehenden Ansprüche, wobei in einem Randbereich (15) der formgebenden Werkzeugoberfläche (12) des Werkzeuges (11) eine Mehrzahl von Sender (16) zur drahtlosen Energieübertragung angeordnet sind.

5. Fertigungsanlage (10) nach einem der vorhergehenden Ansprüche, wobei das Arbeitsmodul (22) der Robotereinheit (20)
- ein Faserlegemodul zum Ablegen von Fasermaterial (13) auf der formgebenden Werkzeugoberfläche (12) zur Herstellung einer Faserpreform (14) ist,
- ein Hilfsstoffmodul zum Aufbringen von Hilfsstoffen auf abgelegtes Fasermaterial (13) zur Herstellung eines Vakuumaufbaus ist,
- ein Applikationsmodul zum Applizieren von Sensoren und/oder Aktoren auf abgelegtes Fasermaterial (13) ist, und/oder
- ein Qualitätsmodul zum Überprüfen der Qualität der Faserpreform (14) ist.

6. Fertigungsanlage (10) nach einem der vorhergehenden Ansprüche, wobei mindestens eine der Robotereinheiten eine mobile Robotereinheit (20) ist, deren Bewegungseinheit (21) zum Befahren der formgebenden Werkzeugoberfläche (12) ausgebildet ist, um die mobile Robotereinheit (20) auf der formgebenden Werkzeugoberfläche (12) zu bewegen und/oder dass mindestens eine der Robotereinheiten (20) als Bewegungseinheit (21) einen Knick-Arm-Roboter aufweist, an dem als Endeffektor das mindestens eine Arbeitsmodul (22) angeordnet ist.

7. Fertigungsanlage (10) nach einem der vorhergehenden Ansprüche, wobei die Energieversorgungseinrichtung zur induktiven drahtlosen Energieübertragung ausgebildet ist, wobei als Sender (16) jeweils Induktionsspulen (16) in dem Werkzeug (11) vorgesehen sind.

8. Verfahren zur Herstellung eines Faserverbundbauteils aus einem Faserverbundwerkstoff aufweisend ein Fasermaterial (13) und ein das Fasermaterial (13) einbettendes Matrixmaterial, wobei mittels einer Fertigungsanlage (10) eine Faserpreform (14) aus dem Fasermaterial (13) auf einer formgebenden Werkzeugoberfläche (12) eines Werkzeuges (11) hergestellt wird, wobei mindestens ein Herstellungsschritt bei der Herstellung der Faserpreform (14) mittels wenigstens eines Arbeitsmodules (22) mindestens einer Robotereinheit (20) durchgeführt wird und das Arbeitsmodul (22) mittels einer Bewegungseinheit (21) über die Werkzeugoberfläche (12) und/oder die Faserpreform (14) verfahren wird, wobei die mindestens eine Robotereinheit (20) drahtlos mit elektrischer Energie durch elektromagnetische Felder mittels einer Energieversorgungseinrichtung der Fertigungsanlage (10) versorgt wird, indem mittels eines in dem Werkzeug (11) vorgesehenen Senders (16) zur drahtlosen Energieübertragung elektromagnetische Felder erzeugt und mittels eines in der Robotereinheit (20) vorgesehenen Empfängers (24) empfangen und in elektrische Energie zur Energieversorgung der Robotereinheit (20) umgewandelt werden.

9. Verfahren nach Anspruch 8, wobei die empfangene elektrische Energie in einen Energiespeicher (23) der Robotereinheit (20) eingespeist wird und die Robotereinheit (20) weiterhin mit elektrischer Energie aus dem Energiespeicher (23) versorgt wird.

10. Verfahren nach Anspruch 8 oder 9, wobei
- mittels eines Faserlegemoduls als Arbeitsmodul (22) Fasermaterial (13) auf der formgebenden Werkzeugoberfläche (12) zur Herstellung der Faserpreform (14) abgelegt wird,
- mittels eines Hilfsstoffmoduls als Arbeitsmodul (22) Hilfsstoffe auf abgelegtes Fasermaterial (13) zur Herstellung eines Vakuumaufbaus aufgebracht wird,
- mittels eines Applikationsmodul als Arbeitsmodul (22) Sensoren und/oder Aktoren auf abgelegtes Fasermaterial (13) appliziert wird, und/oder
- mittels eines Qualitätsmoduls als Arbeitsmodul (22) die Qualität der Faserpreform (14) überprüft wird.

11. Verfahren nach einem Ansprüche 8 bis 10, wobei eine Fertigungsanlage (10) nach einem der Ansprüche 1 bis 7 bereitgestellt wird.

## Claims

1. Manufacturing system (10) for producing a fibre composite component from a fibre composite material having a fibre material (13) and a matrix material embedding the fibre material (13), the manufacturing system (10) comprising:
- a tool (11) with a formative tool surface (12), on which a fibre preform (14) is producible by depositing fibre material (13), and
- at least one robot unit (20) with at least one work module (22) embodied to carry out at least one production step during the production of the fibre preform (14) and a movement unit (21), by means of which the work module (22) is displaceable over the tool surface (12) and/or the fibre preform (14),
wherein the manufacturing system (10) has a power supply device for the electrical power supply of the at least one robot unit (20), the said power supply device being designed for wireless energy transmission of electrical energy by means of electromagnetic fields, with one or more transmitters (16) being provided in the tool (11) for the purpose of generating electromagnetic fields for the wireless energy transmission and at least one receiver (24) being provided in the robot unit (20) for the purpose of receiving electromagnetic fields for the wireless energy transmission, the robot unit (20) being designed to convert the electromagnetic fields received by the at least one receiver (24) into electrical energy for the electrical power supply of the robot unit (20).

2. Manufacturing system (10) according to Claim 1, wherein the robot unit (20) has an energy storage unit (23) which is provided for the electrical power supply of the robot unit (20), the robot unit (20) furthermore being configured to feed the electrical energy that was transmitted wirelessly and received by the receiver (24) of the respective robot unit (20) to the energy storage unit (23).

3. Manufacturing system (10) according to Claim 2, wherein the energy storage unit (23) of the robot unit (20) has one or more capacitors, in particular supercapacitors.

4. Manufacturing system (10) according to any one of the preceding claims, wherein a plurality of transmitters (16) for wireless energy transmission are arranged in an edge region (15) of the formative tool surface (12) of the tool (11).

5. Manufacturing system (10) according to any one of the preceding claims, wherein the work module (22) of the robot unit (20)
- is a fibre laying module for placing fibre material (13) on the formative tool surface (12) for producing a fibre preform (14),
- is an auxiliary substance module for applying auxiliary substances to placed fibre material (13) for producing a vacuum structure,
- is an application module for applying the sensors and/or actuators to placed fibre material (13), and/or
- is a quality module for testing the quality of the fibre preform (14).

6. Manufacturing system (10) according to any one of the preceding claims, wherein at least one of the robot units is a mobile robot unit (20), the movement unit (21) of which is designed to traverse the formative tool surface (12) in order to move the mobile robot unit (20) on the formative tool surface (12) and/or wherein at least one of the robot units (20) has an articulated arm robot as movement unit (21), the at least one work module (22) being arranged on the said articulated arm robot as an end effector.

7. Manufacturing system (10) according to any one of the preceding claims, wherein the power supply device is designed for inductive wireless energy transmission, respective induction coils (16) being provided as transmitters (16) in the tool (11).

8. Method for producing a fibre composite component from a fibre composite material having a fibre material (13) and a matrix material embedding the fibre material (13), with a fibre preform (14) made of the fibre material (13) being produced on a formative tool surface (12) of a tool (11) by means of a manufacturing system (10), with at least one production step during the production of the fibre preform (14) being implemented by means of at least one work module (22) of at least one robot unit (20) and the work module (22) being displaced over the tool surface (12) and/or the fibre preform (14) by means of a movement unit (21), wherein the at least one robot unit (20) is wirelessly supplied with electrical energy by electromagnetic fields by means of a power supply device of the manufacturing system (10) by virtue of electromagnetic fields being generated by means of a transmitter (16) for wireless energy transmission provided for in the tool (11) and the said electromagnetic fields being received by means of a receiver (24) provided for in the robot unit (20) and converted into electrical energy for the power supply of the robot unit (20).

9. Method according to Claim 8, wherein the received electrical energy is fed to an energy storage unit (23) of the robot unit (20) and the robot unit (20) furthermore is supplied with electrical energy from the energy storage unit (23).

10. Method according to Claim 8 or 9, wherein
- fibre material (13) is placed onto the formative tool surface (12) by means of a fibre laying module as a work module (22), for the purposes of producing the fibre preform (14),
- auxiliary substances are applied to placed fibre material (13) by means of an auxiliary substance module as a work module (22), for the purposes of producing a vacuum structure,
- sensors and/or actuators are applied to placed fibre material (13) by means of an application module as a work module (22), and/or
- the quality of the fibre preform (14) is tested by means of quality module as a work module (22).

11. Method according to any one of Claims 8 to 10, wherein a manufacturing system (10) according to any one of Claims 1 to 7 is provided.

## Revendications

1. Installation de fabrication (10) pour fabriquer un composant composite à fibres à partir d'un matériau composite à fibres présentant un matériau fibreux (13) et un matériau de matrice enrobant le matériau fibreux (13), l'installation de fabrication (10) comprenant :
- un outil (11) présentant une surface de mise en forme (12), sur laquelle une préforme de fibres (14) peut être réalisée par pose de matériau fibreux (13), et
- au moins une unité robotique (20) présentant au moins un module de travail (22) qui est conçu pour mettre en oeuvre au moins une étape de fabrication lors de la réalisation de la préforme de fibres (14), et une unité de déplacement (21) permettant de déplacer le module de travail (22) sur la surface d'outil (12) et/ou sur la préforme de fibres (14),
dans laquelle
l'installation de fabrication (10) comprend un dispositif d'alimentation en énergie pour l'alimentation en énergie électrique de ladite au moins une unité robotique (20), qui est conçu pour la transmission d'énergie électrique sans fil au moyen de champs électromagnétiques, un ou plusieurs émetteurs (16) destiné(s) à générer des champs électromagnétiques pour la transmission d'énergie sans fil étant prévus dans l'outil (11), et au moins un récepteur (24) destiné à recevoir des champs électromagnétiques pour la transmission d'énergie sans fil étant prévu dans l'unité robotique (20), l'unité robotique (20) étant conçue pour convertir les champs électromagnétiques, reçus par ledit au moins un récepteur (24), en énergie électrique pour l'alimentation en énergie électrique de l'unité robotique (20).

2. Installation de fabrication (10) selon la revendication 1,
dans laquelle l'unité robotique (20) présente un accumulateur d'énergie (23) qui est prévu pour l'alimentation en énergie électrique de l'unité robotique (20), l'unité robotique (20) étant en outre conçue pour injecter l'énergie électrique, transmise sans fil et reçue par le récepteur (24) de l'unité robotique (20) respective, dans l'accumulateur d'énergie (23).

3. Installation de fabrication (10) selon la revendication 2,
dans laquelle l'accumulateur d'énergie (23) de l'unité robotique (20) comporte un ou plusieurs condensateurs, en particulier des supercondensateurs.

4. Installation de fabrication (10) selon l'une des revendications précédentes,
dans laquelle une pluralité d'émetteurs (16) pour la transmission d'énergie sans fil sont disposés dans une zone de bordure (15) de la surface de mise en forme (12) de l'outil (11).

5. Installation de fabrication (10) selon l'une des revendications précédentes,
dans laquelle le module de travail (22) de l'unité robotique (20) est
- un module de pose de fibres pour poser du matériau fibreux (13) sur la surface de mise en forme (12) de l'outil afin de réaliser une préforme de fibres (14),
- un module d'agents auxiliaires pour appliquer des agents auxiliaires sur le matériau fibreux posé (13) afin de réaliser une structure sous vide,
- un module d'application pour appliquer des capteurs et/ou des actionneurs sur le matériau fibreux posé (13), et/ou
- un module de qualité pour contrôler la qualité de la préforme de fibres (14).

6. Installation de fabrication (10) selon l'une des revendications précédentes,
dans laquelle l'une au moins des unités robotiques est une unité robotique mobile (20) dont l'unité de déplacement (21) est conçue pour se déplacer sur la surface de mise en forme (12) de l'outil, afin de déplacer l'unité robotique mobile (20) sur la surface de mise en forme (12) de l'outil, et/ou
l'une au moins des unités robotiques (20) présente, en tant qu'unité de déplacement (21), un robot à bras articulé sur lequel est disposé, en tant qu'effecteur terminal, ledit au moins un module de travail (22).

7. Installation de fabrication (10) selon l'une des revendications précédentes,
dans laquelle le dispositif d'alimentation en énergie est conçu pour la transmission d'énergie inductive sans fil, des bobines d'induction (16) respectives étant prévues en tant qu'émetteurs (16) dans l'outil (11).

8. Procédé de fabrication d'un composant composite à fibres à partir d'un matériau composite à fibres présentant un matériau fibreux (13) et un matériau de matrice enrobant le matériau fibreux (13),
dans lequel, au moyen d'une installation de fabrication (10), une préforme de fibres (14) est réalisée à partir du matériau fibreux (13) sur une surface de mise en forme (12) d'un outil (11), au moins une étape de fabrication lors de la réalisation de la préforme de fibres (14) est mise en oeuvre au moyen d'au moins un module de travail (22) d'au moins une unité robotique (20), et le module de travail (22) est déplacé sur la surface d'outil (12) et/ou sur la préforme de fibres (14) au moyen d'une unité de déplacement (21),
ladite au moins une unité robotique (20) est alimentée sans fil en énergie électrique par des champs électromagnétiques au moyen d'un dispositif d'alimentation en énergie de l'installation de fabrication (10), par le fait de générer des champs électromagnétiques au moyen d'un émetteur (16) prévu dans l'outil (11) pour la transmission d'énergie sans fil et de les recevoir au moyen d'un récepteur (24) prévu dans l'unité robotique (20) et de les convertir en énergie électrique pour l'alimentation en énergie de l'unité robotique (20).

9. Procédé selon la revendication 8,
dans lequel l'énergie électrique reçue est injectée dans un accumulateur d'énergie (23) de l'unité robotique (20), et l'unité robotique (20) continue à être alimentée en énergie électrique à partir de l'accumulateur d'énergie (23).

10. Procédé selon la revendication 8 ou 9,
dans lequel
- au moyen d'un module de pose de fibres en tant que module de travail (22), du matériau fibreux (13) est posé sur la surface de mise en forme (12) de l'outil pour réaliser la préforme de fibres (14),
- au moyen d'un module d'agents auxiliaires en tant que module de travail (22), des agents auxiliaires sont appliqués sur le matériau fibreux posé (13) pour réaliser une structure sous vide,
- au moyen d'un module d'application en tant que module de travail (22), des capteurs et/ou des actionneurs sont appliqués sur le matériau fibreux posé (13), et/ou
- au moyen d'un module de qualité en tant que module de travail (22), la qualité de la préforme de fibres (14) est contrôlée.

11. Procédé selon l'une des revendications 8 à 10,
dans lequel une installation de fabrication (10) selon l'une des revendications 1 à 7 est mise à disposition.
